# EUROPEAN PATENT APPLICATION

(11) **EP 1 416 777 A2**
(43) Date of publication of application: **06.05.2004**
(21) Application number: 03017540.0
(22) Date of filing: 06.08.2003
(51) Int. Cl.: H05B 41/285

(54) **Protection device for transformers, particularly for supplying power to lamps**

(30) Priority: 29.10.2002 IT TV20020127
(71) Applicant: Siet S.r.l., 31031 Caerano di San Marco (Treviso) (IT)
(72) Inventor: Brollo, Andrea, 31044 Montebelluna (Prov. of Treviso) (IT)
(74) Representative: Modiano, Guido, Dr.-Ing.

(57) **Abstract**

A protection device for a transformer, particularly for supplying power to lamps, the transformer including a primary electric circuit (12) interacting with at least one secondary electric circuit (13a, 13b), comprising an electronic control unit (15) that detects the intensity of the electric current that circulates in the primary circuit (12) as a function of the secondary circuit (13a, 13b) and compares it with a previously stored threshold value, the control unit (15) deactivating the transformer (11) after a preset number of readings of the electric current intensity that are incompatible with the threshold.

## Description

The present invention relates to a protection device for transformers, particularly for supplying power to lamps, such as for example cold-cathode discharge lamps.

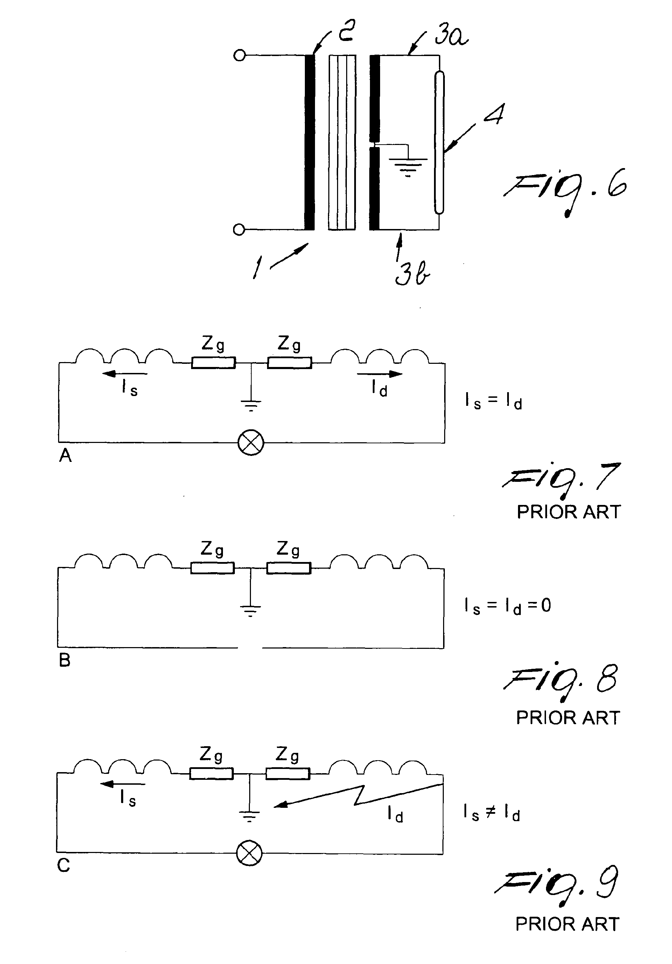

Transformers 1 provided with a low-voltage primary winding 2, coupled to a high-voltage secondary winding or to two high-voltage secondary windings 3a and 3b, with the center tap connected to the ground, as shown in Figure 6, are currently in use.

Irregularities in operation can occur accidentally in these transformers, such as for example a short-circuit of the high voltage toward the ground that involves metallic parts normally not affected by the flow of electric current (commonly known as extraneous conductive parts).

A malfunction can also occur due to the accidental disconnection of a high-voltage cable or due to the breakdown of a user device, designated by the reference numeral 4 in Figure 6, supplied by the high-voltage secondary circuit, such as for example a cold-cathode discharge lamp of the neon type.

Irregularities and malfunctions, such as the ones mentioned, are extremely dangerous both for people and for potentially flammable objects located proximate to the transformer, mainly due to the high voltage.

For this reason, safety standards, such as EN 50.107, have been enacted which require the use of transformers provided with protection devices that are suitable to detect any irregularity in the operation of the high-voltage circuit and if so interrupt the flow of current.

Known types of protection device are currently commercially available which are based on a direct irregularity detection method: said method, illustrated by Figures 7 to 9, entails measuring the current in the two windings of the secondary circuit, for example by interposing two impedance elements Zg that are connected in series to the respective windings.

In this manner, by comparing the right current intensity I_{d} and the left current intensity Iₛ it is possible to detect an interruption of the secondary circuit, due for example to a breakdown of the user device (Figure 8: Iₛ = I_{d} = 0) or determine that a ground fault of one of the branches of the circuit has occurred (Figure 9: Iₛ ≠ I_{d}).

Protection devices of the indirect type are also known which detect for example the disconnection or breakdown of the user device by measuring the electrical current that circulates in the primary circuit.

An interruption of the secondary circuit in fact induces a drastic reduction in the primary circuit current, which decreases to the magnetizing current alone, which is due to the fact that the circuit is powered by the mains.

The main drawback of these known kinds of protection device is that they are affected significantly by the anomalies, even small ones, that can occur during normal operation and can lead to untimely current interruption.

In particular, such anomalies can be constituted for example by waveform variations of the alternating current that circulates in the primary circuit: said waveform variations are often caused by a power supply that is noisy, i.e., rich in harmonic components.

An anomaly can also occur due to the insertion of other electrical loads, extraneous to the system, in the power supply circuit or due to the presence of accidental overvoltages caused for example by lightning.

An untimely tripping of known types of protection device can also be caused by the fact that the wiring in place of the transformer sometimes entails a change in the apparent load applied to the output of said transformer.

In order to partially solve this problem, known types of protection device are currently commercially available which are provided specifically to be usable only within certain current ranges.

Accordingly, the drawback arises due to the fact of having to manufacture and have available a very wide range of protection devices, with considerable management and logistic difficulties.

Another drawback is that storage costs are accordingly particularly high.

There is also the problem that said wide range of different transformers requires the presence of specialized installation technicians, capable of choosing and installing the transformer with the most suitable protection device according to specific requirements.

The difficulty in having specialized labor available can cause an incorrect choice in certain installations, with the consequent severe problem of providing an installation that malfunctions or is potentially dangerous to the safety of people.

The aim of the present invention is to solve the above-mentioned problems, eliminating the drawbacks of the cited known art, by providing a protection device that allows to detect precisely any ground leakage of the electrical current or any disconnection or breakdown of the user device without causing untimely tripping.

Within this aim, an object of the invention is to provide a single device that can be used with the most disparate transformers regardless of the type of user or load to be supplied.

Another object is to provide a device that can be installed easily and in absolute safety, substantially without possibility of errors on the part of the installer.

Another object is to provide a device that in case of fault indicates in a simple and easily readable manner the type of problem that has occurred, providing faster and safe operator intervention.

Another object is to be able to detect a fault due to a short-circuit of the primary circuit, thus avoiding its consequent dangerous overheating.

Another object is to provide a device that is structurally simple and has low manufacturing costs.

This aim and these and other objects that will become better apparent hereinafter are achieved by a protection device for transformers, particularly for supplying power to lamps, that comprise a primary electric circuit that interacts with a secondary electric circuit, characterized in that it comprises at least one electronic control unit for periodically detecting the intensity of the electric current that circulates in the primary circuit as a function of the secondary circuit, for comparing it with at least one previously stored threshold value, and for deactivating the transformer after a preset number of readings of the electric current intensity that are incompatible with the threshold.

Further characteristics and advantages of the invention will become better apparent from the following detailed description of a particular embodiment thereof, illustrated by way of non-limitative example in the accompanying drawings, wherein:
Figure 1 is a schematic view showing the electrical connections between the protection device and the transformer;
Figure 2 is a partially sectional perspective view of a detail of a possible embodiment of the transformer provided with the protection device according to the invention;

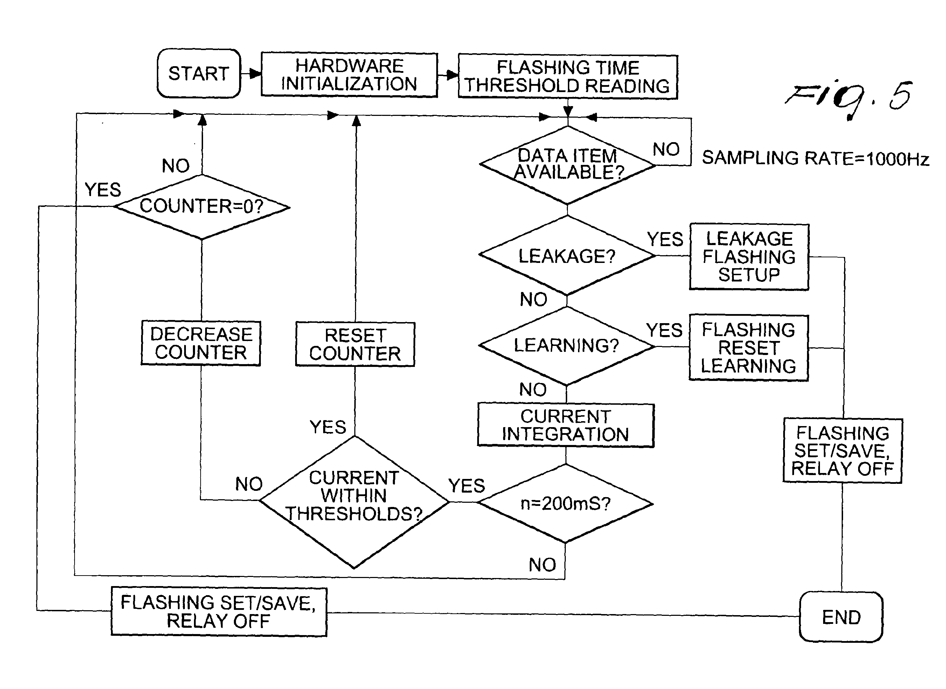

Figures 3 and 4 are two separate block diagrams of the invention;
Figure 5 is a flowchart of a possible software program for managing the protection device;
Figure 6 is a schematic view of a known type of transformer with two secondary windings;
Figures 7 to 9 are views of a known type of protection device.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, the reference numeral 10 designates a protection device for transformers, particularly for supplying power to lamps, such as for example neon lamps and more generally lamps of the cold-cathode type.

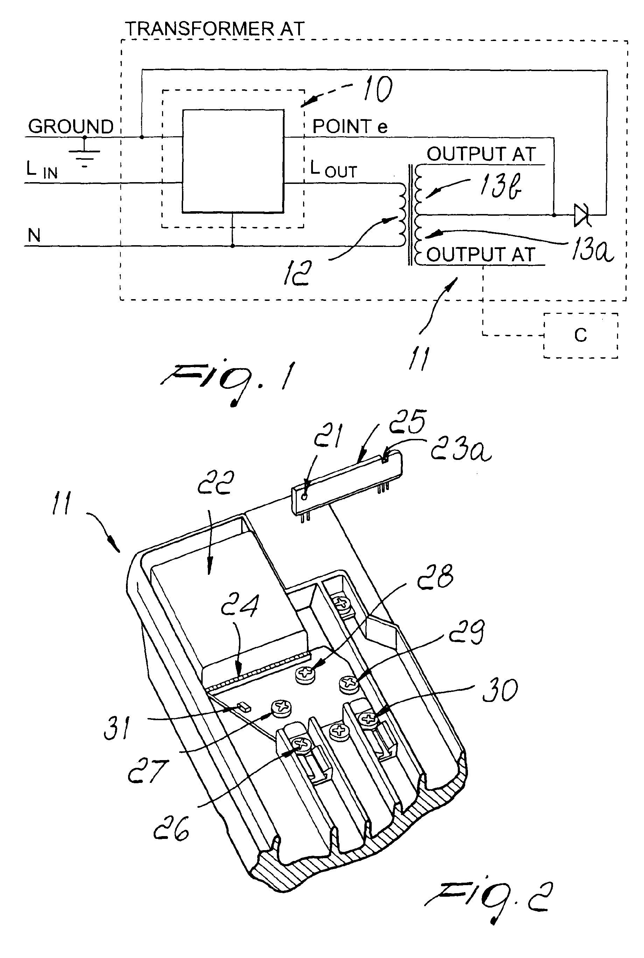

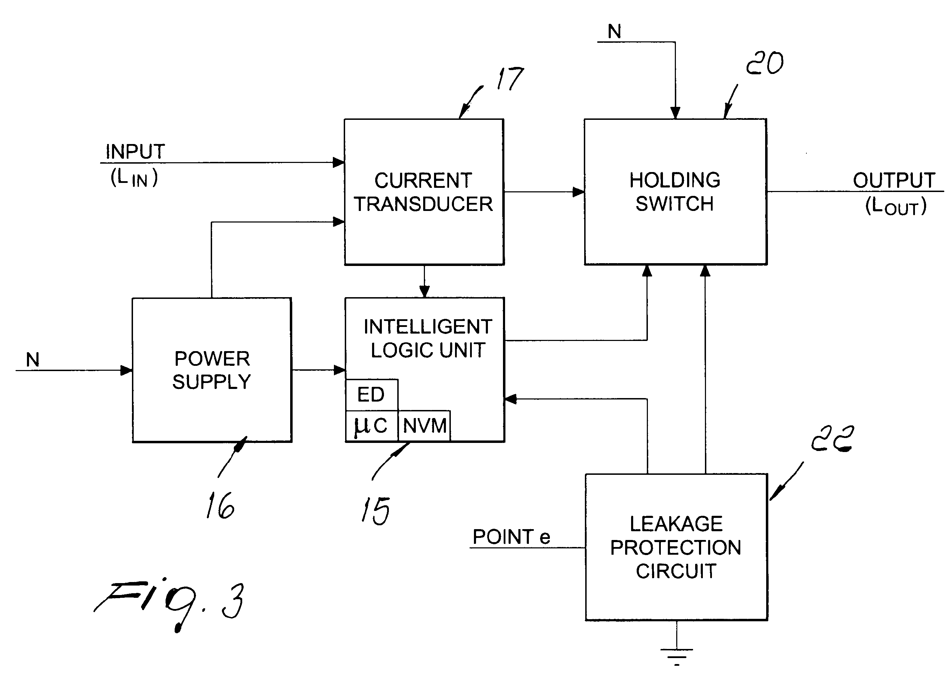

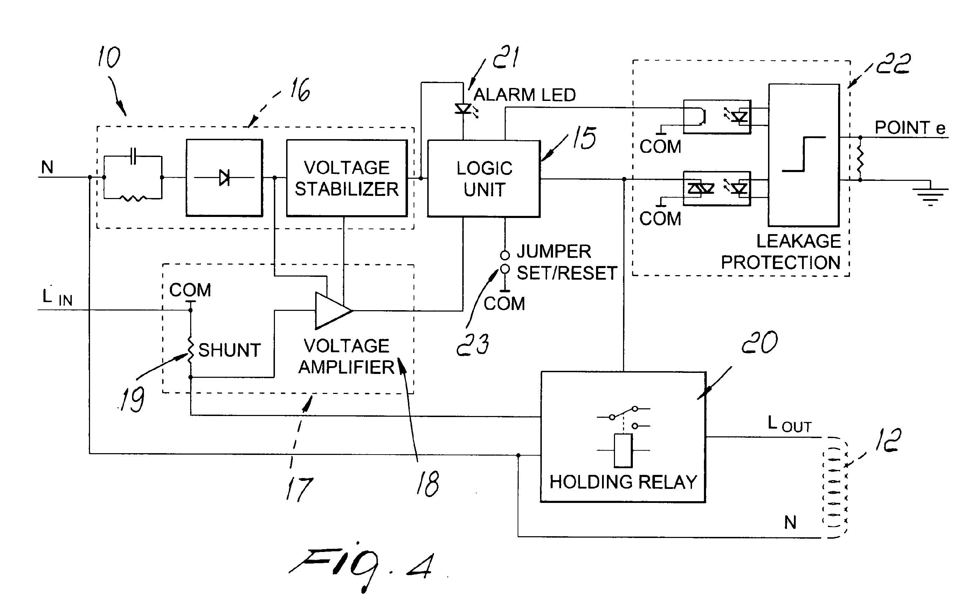

In particular, the protection device 10 is associable with a transformer, designated by the reference numeral 11 in Figure 1, which comprises a primary winding or electric circuit 12 that interacts with at least one, and in the illustrated case two secondary windings or electric circuits 13a and 13b, each of which has a first common end that can be connected to the ground and a second end that is connected to the user device.

In the particular embodiment shown and described by way of example herein, the protection device 10 comprises at least one electronic control unit (designated by the reference numeral 15 and by the caption "LOGICA" in the figures), which is advantageously powered by means of a dropping capacitor, which constitutes a power supply block 16 together with a voltage stabilizer.

The power supply block 16 provides a stabilized voltage both to the control unit 15 and to a current transducer, designated by the reference numeral 17, which is suitable to provide a voltage signal that is proportional to the current absorbed by the transformer 11.

The transducer can be provided, for example, by means of an electric resistor 18, termed shunt resistor, whose voltage signal is appropriately conditioned by a voltage amplifier, designated by the reference numeral 19 in Figure 4.

The voltage transducer 17 is connected to the output line, designated by the caption "L_{OUT}" in the figures, by interposing a switch (or relay) of the holding type, designated by the reference numeral 20.

The transducer 17 is further connected to the electronic control unit 15 so as to send the voltage signal across the shunt resistor 18, appropriately amplified, to a microprocessor or microcontroller µC, not shown, which is part of the electronic control unit 15 and is provided in input with an electronic device ED for converting the signal from analog to digital.

The control unit 15 is suitable to detect the average value of the intensity of the electric current that circulates in the secondary circuit in a preset time interval ΔT.

This can be achieved advantageously by storing in an accumulator register, at each time unit, and therefore for example every millisecond, the value of the current intensity that corresponds to the voltage signal detected across the shunt resistor 18.

Once the time interval ΔT, which corresponds for example to 200 milliseconds, has elapsed, the average value of the intensity of current circulated in the secondary winding is calculated from the total value stored in the accumulator register and is then compared with a threshold value stored previously in a non-volatile memory NVM that is connected to the microcontroller.

After a first reading incompatible with the threshold, the control unit 15 can be programmed so as to transmit to the holding switch 20 a signal to open the circuit and therefore to deactivate the transformer 11.

As an alternative, the electronic control unit 15 can be programmed so as to perform, after the first reading incompatible with the threshold, one or more additional readings of the average current value: if these, too, are incompatible with the threshold, the transformer 11 is deactivated.

Simultaneously with the deactivation of the transformer 11, the electronic control unit 15 activates a luminous indicator or LED, designated by the reference numeral 21, which is suitable to indicate visually the type of malfunction that has caused the activation of the switch 20.

The electronic control unit 15 is further connected to a ground leakage protection circuit, designated by the reference numeral 22, which is of a per se known type and is in turn connected to the holding switch 20, so as to open the electric circuit if the ground leakage is higher than a preset value of electric current (for example higher than 20 mA).

The threshold value with which the average value of the current intensity, calculated at every time interval ΔT, is compared is determined by the electronic control unit 15 after on-site installation of the protection device 1, and can be recalculated advantageously according to the requirements of the installation technician.

The electronic control unit 15 is in fact designed to control the activation of the learning procedure for detecting and storing, in the non-volatile memory NVM, a new threshold value for the electric current.

This control is performed at a discontinuity in the electrical connection, such as for example the discontinuity 23, designated in Figure 4 by the caption "jumper".

When the discontinuity 23 is closed temporarily, therefore, the procedure for learning a new threshold value is activated: this procedure can advantageously provide for the execution of at least two successive readings of the average value of the current in the secondary circuit and for the subsequent comparison between said two readings so as to conclude the procedure only if said two readings have mutually similar values (and therefore have a percentage variation that is smaller than a preset maximum value).

If instead said readings are substantially different from each other, two new readings are performed.

The embodiment shown in Figure 2 partially shows, after the removal of a cover, the rear region of the transformer 11.

In this embodiment, shown only by way of example, the circuit 22 for protection against ground leakage is provided with a board 24 for the electrical connection of a card 25 that comprises the electronic control unit 15, the power supply block 16, and the voltage transducer 17.

The LED 21 protrudes advantageously from the front surface of the card 25.

Moreover, at the upper edge of the card 25 it is possible to provide a slot 23a that constitutes said discontinuity or jumper 23: the interposition of a means for transmitting electric current, such as for example the metallic tip of a screwdriver, between the facing walls of the slot 23a allows to close the circuit meant to activate the learning procedure and therefore to determine and store a new threshold value for the electric current.

Figure 2 further illustrates the connection terminals for the electrical cables, which are advantageously constituted by metallic screws.

In particular, the reference numerals 26 and 27 designate a first screw and a second screw for the connection of the input and output electrical lines (respectively L_{IN} and L_{OUT}); the reference numeral 28 designates a third screw for connection to the ground; the reference numeral 29 designates a fourth screw that is suitable for connecting the electrical line to the point "e", which is the equipotential point between the two secondary windings 13a and 13b; the reference numeral 30 designates a fifth connecting screw for the phase N for the return of the current from the primary winding 12.

The flowchart of Figure 5 illustrates a possible software program for managing the protection device 1.

Said program provides for an initialization of the hardware and of the variables specified hereafter, including the reading of the electric current threshold value from the non-volatile memory of the electronic control unit 15.

Moreover, the maximum allowed excess or defect variation between the calculated average value of the electric current and the threshold value is calculated: these values can be preset during manufacture or determined according to the stored threshold value or optionally variable according to preset characteristics of the system.

The software program then provides for a cycle that comprises in succession, even in a different order, one or more of the following steps.

Checking that the ground leakage protection device 22 is deactivated: if a significant leakage (therefore greater for example than the cited value of 20 mA) is detected, the protection device 22 activates the holding switch 20 and the electronic control unit 15 stores the type of malfunction, simultaneously activating the LED 21 according to a preset first type of flashing.

Another step of the cycle relates to checking that there is no signal for activating the learning procedure and therefore there is no current in the circuit affected by the discontinuity or jumper 23.

The program further performs the cycle at a preset rate, which corresponds to the rate of the sensing and storage, in the accumulator register, of the instantaneous value of the electrical current derived from the voltage transducer.

In this manner, after a preset number of cycles, which correspond to a time interval ΔT, the average electric current intensity circulating in the secondary circuit is determined and compared with the threshold value read initially.

If the average value of the current is not within the preset threshold value, the software program intervenes by decreasing a counter variable initialized earlier to a chosen maximum value that corresponds to the number of off-scale readings that must occur before intervening with the deactivation of the transformer 11.

Said counter variable can have, depending on the type of application, a maximum value that is constituted by a whole number that is equal to one or greater; in particular, if the maximum value of the counter variable is equal to one, a reading beyond the threshold is not repeated but causes the immediate activation of the holding switch 20.

If the maximum value of the counter variable is greater than one, the software program resets said counter variable to its preset maximum value when the average current value is found to be within the threshold after a reading in which it was beyond the threshold and before the counter variable decreases to zero.

If a current reading that is beyond the threshold is followed by a decrease to zero of the counter variable, the type of malfunction detected is stored, the LED 21 is activated according to specific types of flashing, and the holding switch 20 is activated simultaneously.

The activation of the switch 20 on the part of the control unit 15 occurs mainly for two separate reasons: a first reason arises from the sensing of an average current value that is lower than the threshold value by an amount whose absolute value is greater than the maximum variation by defect: this situation occurs for example if the load breaks down or is disconnected.

A second reason for activation of the switch 20 is the sensing of an average current value that is higher than the threshold value by an amount that is greater than the maximum variation by excess; this occurs in case of an overload of the primary circuit for example due to a short circuit.

In Figure 2, the reference numeral 31 designates an output socket for remote indication of the type of malfunction detected: the output socket 31 receives substantially the same signals sent to the LED 21, but allows easier and more immediate detection of the fault.

In this manner, it is possible to provide a console C, that is located remotely with respect to a plurality of transformers 11, each associated with one or more user devices.

The console C, connected to the transformers 11 by means of the sockets 31, allows immediate visualization of the type of fault that has occurred for each user device and/or transformer.

The console C can also be connected to a remote transmission device for sending an alarm signal to a separate control unit or to a telephone, for example by transmitting a text message.

Use is therefore as follows: with reference to Figure 2, it is possible to install a transformer 11 that is provided with a ground leakage protection circuit 22 which comprises a seat for the interconnection of the card 25, such as for example the board 24.

The card 25 integrates the functions of the protection circuit 22, ensuring protection even if, for example, the primary circuit overloads or the user device breaks down or is disconnected.

In any case, the card 25 is removable so that it can be replaced or installed at a later time.

The card 25 has at least one LED 21 for indicating, by flashing, the type of any fault that has occurred.

Once the card 25 has been connected, the installer can intervene by short-circuiting the jumper 23, for example by inserting in the slot 23a the metallic end of a screwdriver, so as to start the procedure for learning and therefore for sensing and storing the intensity of the electric current.

Since the learning procedure is based on the sensing of the current intensity over a time interval ΔT, the electric control unit 15 stores an average value that also takes into account the waveform of the particular user device or load that is supplied.

In this manner, an off-scale reading of the protection device 1 is due almost always to a corresponding malfunction.

It has thus been found that the invention has achieved the intended aim and objects, a protection device having been provided which allows to sense both a ground leakage of the electric current, any disconnection or breakdown of the user device, and any overloading of the primary circuit.

More generally, the invention allows to detect a decrease or increase in the electric current in the circuit, acting accordingly when the sensed values differ excessively from the stored threshold value.

At the same time, by performing a substantial integration of the electric current over time and therefore by acting on average values of said current, the occurrence of untimely trippings caused by accidental and almost instantaneous fluctuations of said current is avoided.

The invention can be installed easily and rapidly by the installer on any kind of user device, since the threshold values are adjusted automatically after installation.

In this manner, the protection device can be used on any transformer and on any kind of user device without the need for the installer to choose the type of transformer and of protection according to the system to be provided.

In case of malfunction, the protection device can also report locally or remotely the type of problem that has occurred, providing faster and safe intervention of the operator.

The invention is of course susceptible of numerous modifications and variations, all of which are within the scope of the appended claims.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The disclosures in Italian Patent Application No. TV2002A000127 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A protection device for a transformer, particularly for supplying power to lamps, the transformer including a primary electric circuit (12) that interacts with at least one secondary electric circuit (13a, 13b), **characterized in that** it comprises at least one electronic control unit (15) for periodically detecting the intensity of the electric current that circulates in said primary circuit (12) as a function of said at least one secondary circuit (13a, 13b), for comparing said intensity with at least one previously stored threshold value, and for deactivating said transformer (11) after a preset number of readings of said electric current intensity that are incompatible with the threshold value.

2. The protection device according to claim 1, further comprising a ground leakage protection circuit (22), said electronic controller being connected to said ground leakage protection circuit (22) so as to store and/or display the activation thereof.

3. The protection device according to one or more of the preceding claims, **characterized in that** said electronic control unit (15) comprises a microcontroller (µC), which is provided in input with an electronic device (ED) for converting the signal from analog to digital and is connected to a non-volatile memory (NVM) for reading and/or storing said at least one threshold value of said current intensity.

4. The protection device according to one or more of the preceding claims, **characterized in that** said electronic control unit (15) is adapted to determine an average value of the intensity of the electric current that circulates in said secondary circuit (13a, 13b) in a preset time interval ΔT.

5. The protection device according to claims 1 and 4, **characterized in that** it further comprises a switch (20) adapted, when an average value of the current intensity that is measured is lower than said threshold value by an amount whose absolute value is greater than a preset first variation, to be activated by said control unit (15) for deactivating said transformer (11).

6. The protection device according to claims 1 and 4, **characterized in that** it further comprises a switch (20) adapted, when an average value of the current intensity that is measured is higher than said threshold value by an amount greater than a preset second variation, to be activated by said control unit (15) for deactivating said transformer (11).

7. The protection device according to one or more of the preceding claims, **characterized in that** said switch (20) is of a holding type, said electronic control unit (15) controlling the activation of said switch (20), after detecting a preset number of consecutive readings that are beyond the threshold.

8. The protection device according to one or more of the preceding claims, **characterized in that** it comprises a current transducer (17) adapted to provide said electronic control unit (15) with a voltage signal that is proportional to the intensity of the electric current that circulates in said secondary circuit (13a, 13b).

9. The protection device according to claims 1 and 8, **characterized in that** said transducer (17) is constituted by an electric resistor (18) that is arranged along the electrical input line in said device, the voltage across said resistor (18) being modulated appropriately by a voltage amplifier (19) that is connected to said electronic control unit (15).

10. The protection device according to claims 1 and 9, **characterized in that** said voltage transducer (17) is connected to the output line of said device by way of the interposition of said holding switch (20).

11. The protection device according to one or more of the preceding claims, **characterized in that** it comprises a power supply block (16), which comprises at least one dropping capacitor and a voltage stabilizer, in order to deliver a stabilized voltage to said electronic control unit (15) and/or to said transducer (17).

12. The protection device according to one or more of the preceding claims, **characterized in that** it comprises a signaling device (21), such as a luminous indicator (LED) that is controlled by said electronic control unit (15), for displaying the type of malfunction that has caused the activation of said holding switch (20).

13. The protection device according to one or more of the preceding claims, **characterized in that** said electronic control unit (15) is adapted to control the activation of a learning procedure for detecting and/or storing, in said non-volatile memory (NVM), a new threshold value for said electric current intensity.

14. The protection device according to claims 1 and 13, **characterized in that** said learning procedure is adapted to be activated for detecting and/or storing a new threshold value when an electric circuit is closed temporarily at a chosen discontinuity (23) along said circuit.

15. The protection device according to claims 1 and 14, **characterized in that** said electronic control unit (15) is adapted to perform, when said learning procedure is activated, at least two successive readings of the average value of the current intensity in the secondary circuit and to subsequently compare said two readings so as to conclude the procedure only if said two readings are similar to each other, and therefore have a percentage difference that is lower than a preset maximum value.

16. The protection device according to one or more of the preceding claims, **characterized in that** it comprises a ground leakage protection circuit (22) which is provided with a port or board (24) for the electrical connection of a card (25) that comprises said electronic control unit (15).

17. The protection device according to claims 1 and 16, **characterized in that** said card (25) comprises said power supply block (16), with which said electronic control unit (15) and said voltage transducer (17) are associated, in order to detect a variation in the intensity of electric current that exceeds preset limits or variations, so as to achieve the temporary deactivation of said transformer (11).

18. The protection device according to claims 1 and 17, **characterized in that** it comprises a slot (23a) formed at a lateral edge of said card (25) and constituting said discontinuity (23), a temporary electrical closure of said discontinuity (23) forcing the activation of said procedure for learning a new threshold value for the electric current.

19. The protection device according to one or more of the preceding claims, **characterized in that** it comprises an output socket (31) for remote signaling of the type of malfunction detected by said electronic control unit (15).

20. The protection device according to claims 1 and 19, **characterized in that** said output socket (31) substantially receives the same signals sent by said electronic control unit (15) to said luminous indicator (LED).

21. The protection device according to claims 1 and 19, **characterized in that** said socket (31) is adapted to allow the connection of the device to a remote console (C) for displaying and controlling the state of one or more transformers (11).

22. The protection device according to claims 1 and 19, **characterized in that** said console (C) is associable with a remote transmission device for sending an alarm signal to a separate control unit and/or to a telephone.

23. A method for protecting a transformer with a protection device according to one or more of the preceding claims, that has a ground leakage protection circuit (22), an electronic control unit (15) comprising a microcontroller (µC) which interacts with a non-volatile memory (NVM), comprising, even in a different order, the following steps:
-- initializing operations and reading from said memory a preset threshold value for the electric current that circulates in the secondary circuit (13a, 13b);
-- checking the deactivation of said ground leakage protection device (22);
-- checking the absence of the signal for activating the learning procedure, in order to detect and store a new threshold value for said electric current;
-- determining an average value of the intensity of the electric current that circulates in the secondary circuit (13a, 13b) in a preset time interval ΔT;
-- comparing said average value of electric current intensity with said preset threshold value;
-- deactivating said transformer (11) after a preset number of consecutive readings of said average value of the electric current intensity that are beyond the threshold; and
-- optionally repeating one or more of the preceding steps.

24. The method of claim 23, comprising, even in a different order, one or more of the steps of the following cycle, performed at a preset rate:
-- checking the deactivation of said ground leakage protection device (22);
-- checking the absence of the signal for activation of the learning procedure, in order to detect and store a new threshold value for said electric current; and
-- detecting and storing, in an accumulator register of said non-volatile memory, the instantaneous value of the intensity of the electric current that circulates in the secondary circuit (13a, 13b).

25. The method according to claims 23 and 24, **characterized in that** when a number of iterations of said cycle equal to the product of the time interval ΔT by the preset rate of said cycle is reached, the average value of the electric current intensity in the time interval ΔT corresponds to the value stored in said accumulator register.
